(19) Europäisches Patentamt
European Patent Office
Office européen des brevets

(11) EP 3 438 950 A1

(12) DEMANDE DE BREVET EUROPEEN

(43) Date de publication:
06.02.2019 Bulletin 2019/06

(51) Int Cl.:
G08G 5/00 (2006.01)     G08G 5/02 (2006.01)
G05D 1/10 (2006.01)

(21) Numéro de dépôt: 18182475.6

(22) Date de dépôt: 09.07.2018

(84) Etats contractants désignés:
AL AT BE BG CH CY CZ DE DK EE ES FI FR GB GR HR HU IE IS IT LI LT LU LV MC MK MT NL NO PL PT RO RS SE SI SK SM TR
Etats d'extension désignés:
BA ME
Etats de validation désignés:
KH MA MD TN

(30) Priorité: 03.08.2017 FR 1757446

(71) Demandeur: Airbus Operations S.A.S.
31060 Toulouse (FR)

(72) Inventeurs:
• ROBIN, Jean-Luc
31240 SAINT-JEAN (FR)
• TORRALBA, José
31330 MERVILLE (FR)
• LEBAS, Julie
31200 TOULOUSE (FR)

(74) Mandataire: Gicquel, Olivier Yves Gérard
Airbus Opérations (S.A.S)
XIF - M0101/1
316, route de Bayonne
31060 Toulouse Cedex (FR)

(54) PROCEDE D ANTICIPATION DU DEPLACEMENT D'UN TOURBILLON DE SILLAGE DANS UN VOL EN FORMATION DE DEUX AERONEFS

(57) L'invention concerne un procédé d'anticipation du déplacement d'un tourbillon de sillage généré par un aéronef, dit aéronef meneur, le procédé étant mis en oeuvre par un système de gestion de vol d'un aéronef, dit aéronef suiveur, volant dans le sillage de l'aéronef meneur, le procédé comprenant:
- une étape de mise en vol en formation, dans laquelle le système de gestion de vol définit un plan de vol dans lequel l'aéronef suiveur vole à une distance prédéterminée de l'aéronef meneur et se place à une distance prédéterminée d'un centre d'un tourbillon de sillage ;
- une étape de réception de paramètres inertiels, dans laquelle un système de gestion de vol de l'aéronef suiveur formule une demande de paramètres inertiels de l'aéronef meneur et reçoit, via un échange de signaux entre l'aéronef meneur et l'aéronef intrus, les paramètres inertiels de l'aéronef meneur ; et
- une étape de prise de décision, dans laquelle le système de gestion de vol de l'aéronef suiveur évalue une possibilité que la trajectoire de l'aéronef suiveur croise celle du tourbillon de sillage et modifie le plan de vol de l'aéronef suiveur s'il estime que la trajectoire de l'aéronef suiveur croise celle d'un tourbillon de sillage.

Fig. 3c

EP 3 438 950 A1

## Description

La présente invention concerne un procédé trouvant application à un vol en formation de deux aéronefs comprenant un aéronef suivi, dit aéronef meneur, et un aéronef suiveur qui vole derrière l'aéronef meneur. La mise en oeuvre du procédé permet à l'aéronef suiveur d'éviter de croiser un tourbillon de sillage généré par l'aéronef meneur suite à une manoeuvre de ce dernier.

L'aéronef meneur génère dans son sillage, au niveau de chacune de ses ailes, un tourbillon de sillage (wake vortex en terminologie anglo-saxonne). A partir des ailes, les tourbillons de sillage tendent d'abord à se rapprocher l'un de l'autre, puis à maintenir une distance plus ou moins constante entre eux tout en perdant de l'altitude par rapport à l'altitude à laquelle ils ont été générés.

Il est intéressant pour l'aéronef suiveur de pouvoir calculer les positions des centres des tourbillons de sillage générés par l'aéronef meneur afin de se placer latéralement à une distance optimale du centre d'un tourbillon de telle sorte qu'il profite au maximum des vents ascendants des tourbillons afin de réduire sa consommation de carburant. Cette distance optimale, mesurée entre le bout d'aile de l'aéronef suiveur et le centre du tourbillon, est supérieure à 10m. En se plaçant en deçà de cette distance optimale, l'aéronef suiveur subira au contraire des turbulences désagréables pour le confort des passagers, d'autant plus puissantes que le fuselage de l'aéronef suiveur se rapproche du centre du tourbillon.

Au cours d'un vol en formation, il peut arriver que l'aéronef meneur vire ou subisse une accélération verticale, par exemple du fait de perturbations atmosphériques (vents, turbulences...). Or, les positions successives des centres des tourbillons générés par l'aéronef meneur vont suivre le mouvement de l'aéronef meneur, avec une amplitude de déplacement dépendant de leur éloignement à l'aéronef meneur.

Afin que l'aéronef suiveur ne croise pas le centre d'un tourbillon de sillage suite à une manoeuvre de l'aéronef meneur, la trajectoire de l'aéronef suiveur doit pouvoir anticiper le déplacement des centres de tourbillons de sillage (c'est-à-dire la trajectoire des tourbillons) suite à la manoeuvre de l'aéronef meneur.

La présente invention a pour objet de répondre en tout ou partie à ce besoin et concerne un procédé d'anticipation du déplacement d'un tourbillon de sillage tel que revendiqué dans la revendication 1.

Grâce à la présente invention, les passagers d'un aéronef suiveur volant en formation derrière un aéronef meneur conservent un confort optimal même lorsque l'aéronef meneur entreprend une manoeuvre (manoeuvre volontaire du fait, par exemple, d'un suivi ou modification du plan de vol ou manoeuvre involontaire du fait, par exemple, de turbulences/vents) qui va modifier les trajectoires des tourbillons de sillage qu'il génère.

Les caractéristiques de l'invention mentionnées ci-dessus, ainsi que d'autres, apparaîtront plus clairement à la lecture de la description suivante d'exemples de réalisation, ladite description étant faite en relation avec les figures jointes:

- la figure 1 est une représentation schématique d'un aéronef comprenant une pluralité de systèmes embarqués permettant la mise en oeuvre d'un procédé d'anticipation du déplacement des tourbillons de sillage selon l'invention;
- la figure 2 est une représentation schématique d'un détail d'un système d'évitement de collision embarqué dans un aéronef de la figure 1 ;
- les figures 3a à 3c sont des représentations schématiques à différents instants d'une formation de deux aéronefs tels qu'illustrés à la figure 1, dont un aéronef meneur générant des tourbillons de sillage virant sur sa droite (figure 3b) et un aéronef intrus volant en formation dans le sillage de l'aéronef meneur et mettant en oeuvre le procédé d'anticipation du déplacement des tourbillons de sillage selon l'invention ; et
- la figure 4 est une vue schématique des étapes du procédé d'anticipation de déplacement de tourbillons de sillage mise en oeuvre par un aéronef suiveur volant en formation avec un aéronef tel que représenté aux figures 3a-3c, selon un mode de réalisation l'invention.

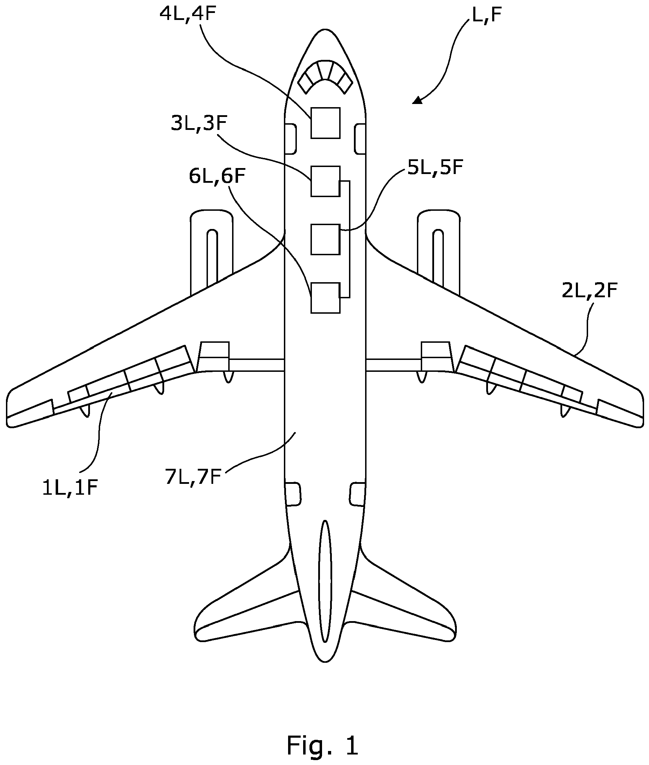

En relation avec la figure 1, un aéronef L, F comprend deux ailes 1L, 2L, et une pluralité de systèmes embarqués dans son fuselage 7L, 7F, dont un système de gestion de vol 3L, 3F de type calculateur embarqué (appelé flight management system en terminologie anglo-saxonne) pour définir le plan de vol de l'aéronef, un système d'aide au pilotage 4L, 4F pour aider le pilote à suivre le plan de vol, un système de référence inertielle 5L,5F de type ADIRS (Air Data Inertial Reference System : système de référence inertielle de données de vol), et un système d'évitement de collision 6L,6F pour prévenir tout risque de collisions avec d'autres aéronefs.

Les systèmes d'aide au pilotage 4L, 4F, de référence inertielle 5L, 5F et d'évitement de collision 6L, 6F sont connectés aux systèmes de gestion de vol 3L, 3F.

Le système de gestion de vol 3L, 3F est connecté au système de référence inertielle duquel il reçoit différents paramètres inertiels de l'aéronef (cap, angle de roulis, angle d'inclinaison latérale de l'aéronef, assiette angle de dérapage...) et à une pluralité de capteurs de l'aéronef (non représentés) desquels il reçoit des paramètres de vol de l'aéronef (altitude, masse de l'aéronef, la densité de l'air au point de vol, accélération, vitesse...). A partir de ces différents paramètres, le système de gestion de vol 3L, 3F est configuré pour calculer la trajectoire de l'aéronef. L, F.

Le système de gestion de vol 4L,I, outre la gestion/définition du plan de vol de l'aéronef L, F est configuré pour calculer la position des centres de chaque tourbillon de sillage généré par un autre aéronef à partir des paramètres de vol dudit l'aéronef.

La position des centres des tourbillons de sillage générés par un aéronef est obtenue par le calcul de la vitesse de descente Wv desdits tourbillons qui est, par exemple, calculée avec la relation suivante :

$$w_v = \frac{m \cdot g \cdot n_z}{2 \cdot \pi \cdot \rho \cdot V \cdot b_v{}^2}$$

où

m la masse de l'aéronef générant les tourbillons (kg)
g l'accélération de la pesanteur (m/s²)
ρ la densité de l'air au point de vol (kg.m-3)
V la vitesse air de l'aéronef générant les tourbillons (m.s-1)
bv l'espacement entre les 2 vortex (m) = envergure de l'aéronef générant les tourbillons
nz le facteur de charge subi par l'aéronef.

Le système d'aide au pilotage 4L, 4F est activable par le pilote qui sélectionne le mode de fonctionnement dudit système entre un:

- mode de pilotage automatique dans lequel le système d'aide au pilotage 4L, 4F, grâce à un ensemble de servocommandes, asservit l'aéronef L,F afin que ce dernier suive le plan de vol fournit par le système de gestion de vol 3L, 3F.
- mode directeur de vol dans lequel le système d'aide au pilotage 4L, 4F fournit au pilote une aide graphique affichée sur un des écrans du poste de pilotage (non représenté), afin de le guider dans des manoeuvres à effectuer pour que l'aéronef suive le plan de vol fournit par le système de gestion de vol 3L, 3F.

On notera que lors de l'exécution d'un vol en formation, le pilote active nécessairement le système d'aide au pilotage dans l'un ou dans l'autre de ces deux modes de fonctionnement afin de l'aider dans le pilotage de l'aéronef L,F.

De manière connue, le système d'évitement de collision 6L, 6I avertit l'équipage de l'aéronef L,F de probabilités de collisions avec d'autres aéronefs volant dans un volume de surveillance réparti autour (sur 360°) de l'aéronef et dont les dimensions sont dépendantes de la vitesse de l'aéronef L,F.

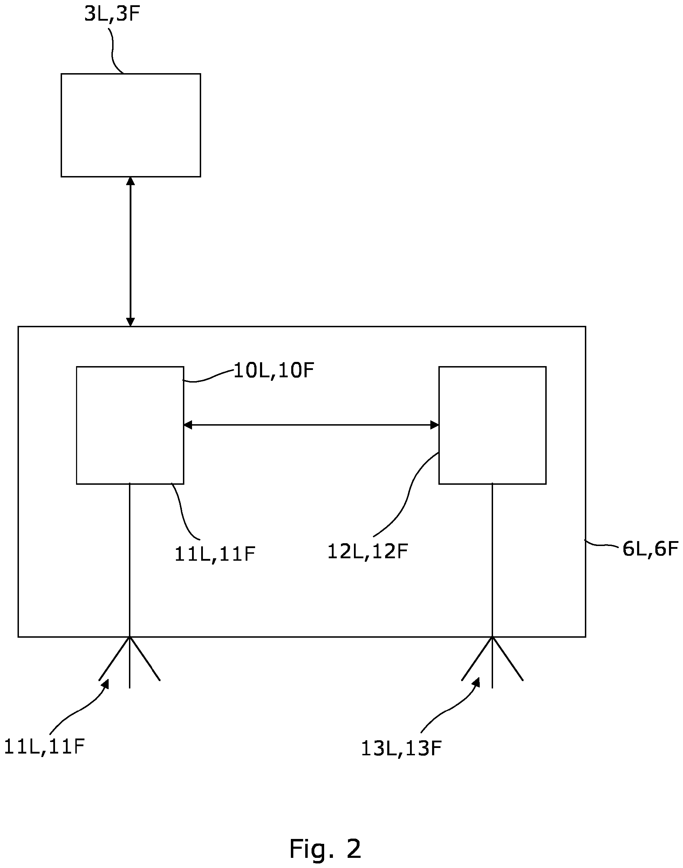

En référence avec la figure 2, le système d'évitement de collision 6L,6F est un dispositif actif de type TCAS (« Traffic Collision Avoidance System ») et comprend à ce titre :

- un interrogateur 10L, 10 F, de type unité centrale, connecté à au moins une antenne directionnelle 11L, 11F, dite antenne d'interrogateur, montée sur l'aéronef;
- un transpondeur 12L, 12F (ou XPDR en terminologie aéronautique), de type unité centrale, connecté à au moins une antenne 13L, 13F, par exemple omnidirectionnelle, dite antenne de transpondeur, montée sur l'aéronef.

Dans le principe de fonctionnement des dispositifs actifs de type TCAS, l'interrogateur 10F d'un aéronef suiveur F émet à une fréquence fixe de 1030 MHz et à intervalle régulier (par exemple toutes les secondes) des signaux d'interrogations.

Le transpondeur 12L d'un aéronef meneur L recevant un signal d'interrogation répond en transmettant un signal réponse à l'aéronef suiveur F. Le signal réponse contient les identifiants de l'aéronef meneur L et permet au système de gestion de vol 3F de l'aéronef suiveur d'estimer, après analyse dudit signal, un temps de collision et de prendre des mesures pour éliminer tout risque de collision.

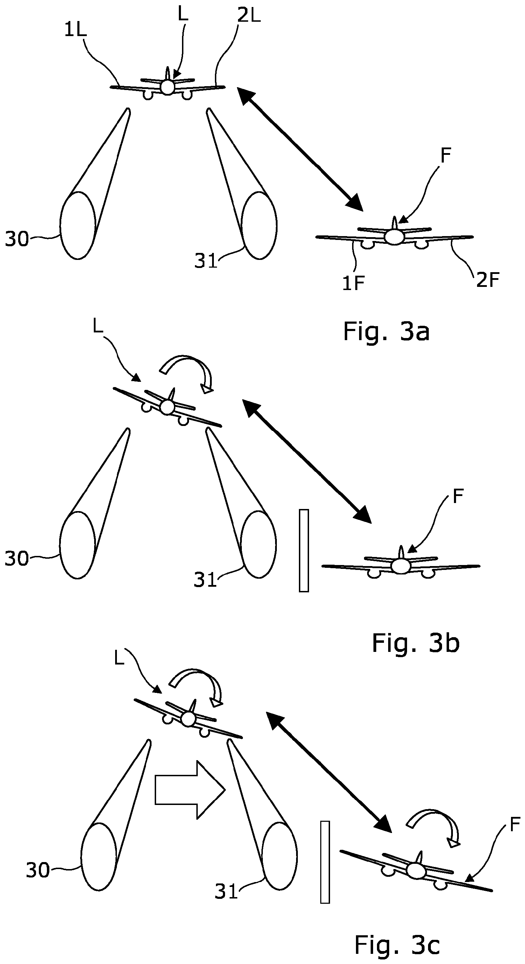

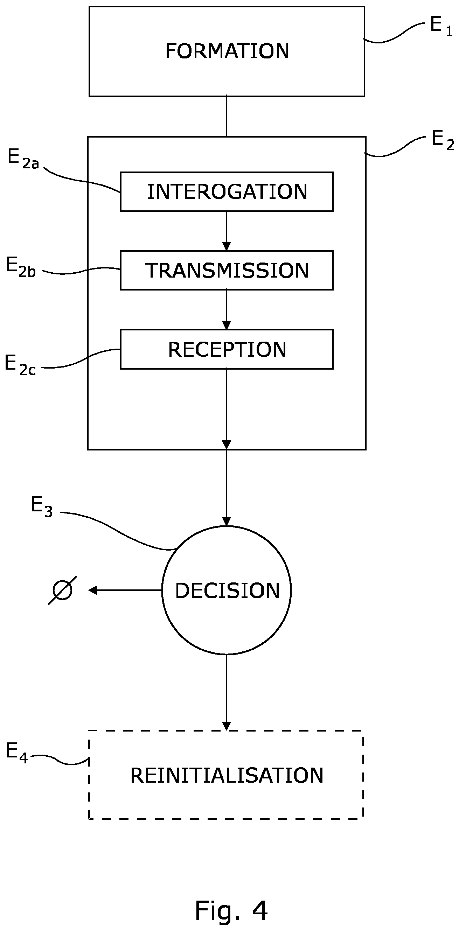

Le procédé selon l'invention, permettant à un aéronef suiveur d'éviter de croiser des tourbillons de sillage générés par un aéronef meneur va être explicité en relation avec les figures 3a-c et 4.

On considère un aéronef L, dit aéronef meneur, générant au niveau de chacune de ses deux ailes 1L, 2L un tourbillon de sillage 30, 31 (respectivement bâbord pour le tourbillon généré au niveau de l'aile gauche 1L - et tribord pour le tourbillon généré au niveau de l'aile droite 2L) et un aéronef suiveur F volant dans le sillage de l'aéronef meneur L. Chacun des aéronefs meneur L ou suiveur F est équipé tel que décrit plus haut. Les références sur les figures portent le suffixe L pour l'aéronef meneur, ou F pour l'aéronef suiveur.

Dans l'exemple illustré aux figures 3a-3c, l'aéronef suiveur F est dans la position initiale (figure 3a) puis entame un virage à droite aux figures 3b et 3c.

- dans une étape de mise en vol en formation E1, le système de gestion de vol 3F de l'aéronef suiveur F définit un plan de vol pour que le système d'aide au pilotage 4F de l'aéronef suiveur amène l'aéronef suiveur F à une distance prédéterminée de l'aéronef meneur L et le place à une distance prédéterminée d'un centre d'un des tourbillon de sillage (par exemple le tourbillon de sillage tribord 31 comme illustré aux figures 3a-c). Suite à la mise en oeuvre de cette étape, l'aéronef suiveur F bénéficie des vents ascendants du tourbillon de sillage. A titre d'exemple, suite à la mise en oeuvre de cette étape, l'aéronef suiveur F a son aile gauche située à une distance latérale (supérieure à 10m et inférieure à 100 m) du centre du tourbillon de sillage tribord 31, et vole à une distance comprise entre environ 0.8 NM (0.8 miles nautique = 1481,6 m) et 1.8NM (1.8 miles nautiques = 3333,6 m) de l'aéronef meneur L.
- dans une étape de réception de paramètres inertiels E2, mise en oeuvre à une fréquence régulière, le système de gestion de vol 3F de l'aéronef suiveur F formule une demande de paramètres inertiels à l'aéronef meneur L et reçoit, via une échange de signaux entre le système d'évitement de collision de l'aéronef suiveur et celui de l'aéronef meneur 6L, 6F, les paramètres inertiels de l'aéronef meneur L.

Dans le détail, l'étape de réception de paramètres inertiels E2 comprend :

- une sous étape d'interrogation E2a, dans laquelle l'interrogateur 10F de l'aéronef suiveur F émet périodiquement via l'antenne d'interrogateur 11F, un signal d'interrogation, sur 1030 MHz par exemple, dans chacun des quatre segments d'azimut de 90°. Le signal d'interrogation émis contient l'adresse de l'aéronef meneur L et une demande de paramètres inertiels de l'aéronef meneur L formulée par le système de gestion de vol 3F de l'aéronef suiveur F; et

- une sous étape de transmission E2b, dans laquelle le transpondeur 12L de l'aéronef meneur L, volant dans le volume de surveillance de l'aéronef suiveur, reçoit, le signal d'interrogation de l'aéronef suiveur F via l'antenne d'interrogateur 11L puis envoie via l'antenne de transpondeur 13L, un signal réponse à l'interrogateur 10F de l'aéronef suiveur F, sur 1090 MHz par exemple, en réponse au signal d'interrogation de l'aéronef suiveur F. Le signal réponse consiste en une série d'impulsions qui contiennent des identifiants de l'aéronef meneur L et les paramètres inertiels de l'aéronef meneur L demandés par l'aéronef suiveur F et fournis par le système de référence inertielle 5L de l'aéronef meneur ; et

- une sous étape de réception E2c, dans laquelle l'interrogateur 10F de l'aéronef suiveur F reçoit, via l'antenne 11F, le signal réponse qui est transmis au système de gestion de vol 3F qui compile les paramètres inertiels de l'aéronef meneur L.

- ensuite, dans une étape de prise de décision E3, le système de gestion de vol 3F de l'aéronef suiveur F estime/évalue une possibilité que la trajectoire de l'aéronef suiveur F croise celle du tourbillon de sillage (le tourbillon de sillage tribord dans l'exemple des figures 3a-c), notamment suite à une manoeuvre de l'aéronef meneur L qui se traduit par une modification des paramètres inertiels de ce dernier. La détermination est effectuée via un calcul de la trajectoire du tourbillon de sillage t, puis via une comparaison de cette trajectoire à celle de l'aéronef suiveur. La trajectoire du tourbillon étant calculée par le système de gestion de vol 3F à partir d'un calcul de la position des centres du tourbillon et d'un calcul de prévision de déplacement de ces centres en fonction des paramètres inertiels de l'aéronef meneur L.

Si le système de gestion de vol 3F détermine que la trajectoire de l'aéronef suiveur F croise celle du tourbillon de sillage, le système de gestion de vol 3F modifie le plan de vol, et donc la trajectoire de l'aéronef suiveur F afin d'écarter toute possibilité de croisement entre l'aéronef suiveur F et le tourbillon de sillage. Le système d'aide au pilotage 4F de l'aéronef suiveur F suit le plan de vol modifié et la trajectoire de l'aéronef suiveur F est modifiée (figure 3c) de sorte que ce dernier évite le tourbillon de sillage (tourbillon de sillage tribord 31 dans l'exemple de la figure cc).

L'un des avantages de l'invention est d'assurer que les passagers de l'aéronef suiveur F volant en formation derrière un aéronef meneur L conservent un confort optimal même lorsque l'aéronef meneur L entreprend une manoeuvre (manoeuvre volontaire du fait, par exemple, d'un suivi ou modification du plan de vol ou manoeuvre involontaire du fait, par exemple, de turbulences/vents) qui va modifier les trajectoires des tourbillons de sillage qu'il génère.

Pour les opérations à bord de l'aéronef suiveur F, la mise en oeuvre du procédé d'anticipation du déplacement des tourbillons de sillage est transparente car totalement automatisée.

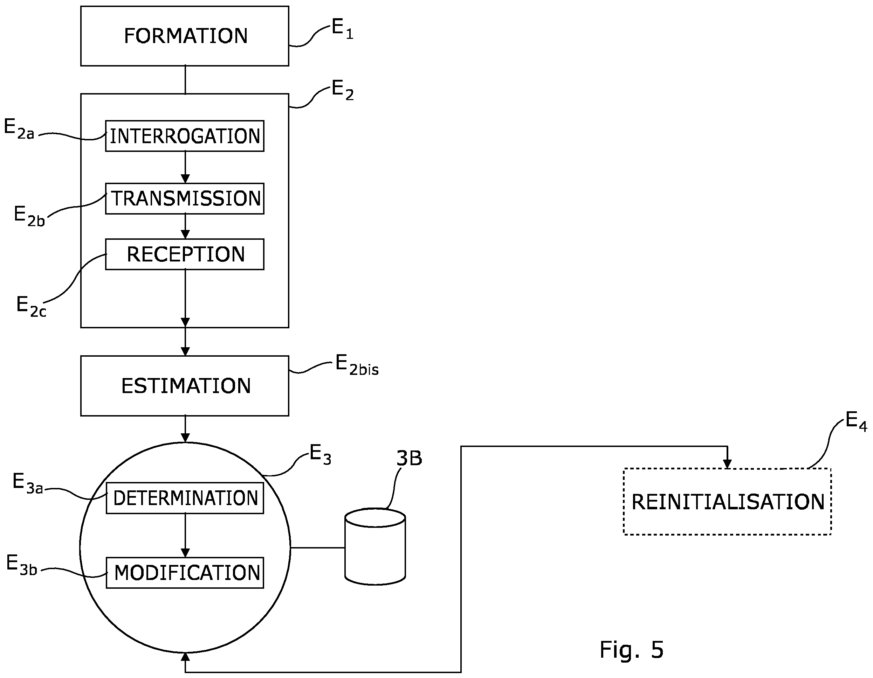

Dans une variante de réalisation de l'invention, le système de gestion de vol comprend une base de données 3B (voir figure 5) qui comprend une table de décision utilisable dans le cas où l'aéronef est un aéronef suiveur F d'un aéronef meneur L dans un vol en formation de deux aéronefs.

Dans la table de décision, différentes manoeuvres possibles de l'aéronef meneur L sont répertoriées (par exemple : par exemple virage à gauche avec un angle de roulis de 10° et un facteur de charge de 2g, montée avec une assiette de 10° et un facteur de charge de 1g....) et à chaque manoeuvre d'un aéronef meneur L sont associées deux manoeuvres d'évitement prédéterminées pour éviter de croiser les tourbillons de sillage de l'aéronef meneur L: une première manoeuvre d'évitement dans le cas où l'aéronef suiveur F bénéficie des vents ascendants d'un tourbillon de sillage bâbord 30 (c'est-à-dire si l'aéronef suiveur F vole à gauche dudit tourbillon) généré par l'aéronef meneur L, et une seconde manoeuvre d'évitement dans le cas où l'aéronef suiveur F bénéficie des vents ascendants d'un tourbillon de sillage tribord 31 (c'est-à-dire si l'aéronef suiveur F vole à droite dudit tourbillon) généré par l'aéronef meneur L.

Selon cette variante, et en référence avec la figure 5, le procédé tel que décrit plus haut est modifié en ce sens que :

- suite à l'étape de réception de paramètres inertiels E2 et avant l'étape de prise de décision E3, le système de gestion de vol 3F de l'aéronef suiveur, dans une étape d'estimation E2bis, estime , à partir des paramètres inertiels de ce dernier, quelle est la manoeuvre (par exemple : par exemple virage à gauche avec un angle de roulis de 10° et un facteur de charge de 2g, montée avec une assiette de 10° et un facteur de charge de 1g....) entreprise par l'aéronef meneur ;

- dans l'étape de prise de décision E3, l'évaluation n'est pas effectuée via des calculs de trajectoires mais via une recherche de correspondance, effectuée par le système de gestion de vol 3F, entre la manoeuvre de l'aéronef meneur déterminée à l'étape d'estimation E2bis et une des manoeuvres enregistrées dans la table de décision de la base de données 3B.

Si aucune correspondance n'est trouvée, le plan de vol de l'aéronef suiveur F n'est pas modifié.

Si au contraire, une correspondance est trouvée, le système de gestion de vol 3F :

- dans une sous étape de détermination E3a, détermine la position de l'aéronef suiveur par rapport aux tourbillons de sillage de l'aéronef meneur (c'est-à-dire détermine si l'aéronef suiveur utilise les vents ascendants du tourbillon de sillage bâbord 30 ou ceux du tourbillon de sillage tribord 31) et
- dans une sous-étape de modification E3b, modifie le plan de vol pour mettre en oeuvre la manoeuvre d'évitement associée à la manoeuvre déterminée à l'étape d'estimation E2bis et à la position de l'aéronef prédéterminée et la trajectoire de l'aéronef suiveur F par rapport aux tourbillons de sillage de l'aéronef meneur.

Suite à cette sous étape de modification E3b, le système d'aide au pilotage 4F de l'aéronef suiveur F suit le plan de vol modifié et la trajectoire de l'aéronef suiveur F est modifiée (figure 3c) de sorte que ce dernier évite le tourbillon de sillage (par exemple le tourbillon de sillage tribord 31 dans l'exemple de la figure 3c).

A titre d'illustration, la table de décision peut comporter les manoeuvres d'évitement suivantes, dans le cas d'une formation à deux aéronefs L et F et dans le cas d'un aéronef suiveur F ayant son aile gauche 1F située à une distance latérale optimale du centre du tourbillon de sillage tribord 31 de l'aéronef meneur L :

A/ si l'aéronef meneur L tourne avec un angle de roulis de 10° vers la droite, avec un facteur de charge de 2g, l'aéronef suiveur F doit tourner avec un angle de roulis de 20° vers la droite avec un facteur de charge de 2g.
B/ si l'aéronef meneur L tourne avec une inclinaison de 10° vers la gauche, avec un facteur de charge de 2g, l'aéronef suiveur F doit tourner avec un angle de roulis de 20° vers la droite avec un facteur de charge de 3g.
C/ si l'aéronef meneur L descend avec un facteur de charge de -0.1g et une assiette de -10° , l'aéronef suiveur F doit monter avec facteur de charge de 0.1g et une assiette de + 20°.
D/ si l'aéronef meneur L descend avec un facteur de charge de 0.1g et une assiette de 10°, l'aéronef suiveur F doit descendre avec un facteur de charge de -0.1g et une assiette de -20°.

On notera que les manoeuvres d'évitement peuvent avoir des amplitudes plus fortes que les manoeuvres entreprises par l'aéronef meneur L, cela afin de prendre en compte le retard de la transmission des paramètres inertiels de l'aéronef meneur L à l'aéronef suiveur F.

Dans les procédés illustrés aux figures 4 et 5, une étape de réinitialisation E4 est de préférence mise en oeuvre au bout d'un temps prédéterminé (par exemple 30 secondes) après la modification du plan de vol afin d'éviter de croiser la trajectoire d'un tourbillon de sillage 30,31. Dans cette étape de réinitialisation, le système de gestion de vol 3F modifie le plan de vol de l'aéronef suiveur F pour replacer ce dernier dans sa position initiale (voir figure 3a).

L'invention a été décrite en considérant que les aéronefs meneur et suiveur communiquent via leur système d'évitement de collision de type TCAS pour que l'aéronef suiveur obtienne les paramètres inertiels de l'aéronef meneur. D'autres systèmes peuvent cependant être utilisés sans sortir du cadre de l'invention, par exemple des systèmes de type liens de données (datalink), des systèmes de type ADS-B...

## Revendications

1. Procédé d'anticipation du déplacement d'un tourbillon de sillage (30,31) généré par un aéronef, dit aéronef meneur, le procédé étant mis en oeuvre par un système de gestion de vol (3F) embarqué dans un aéronef, dit aéronef suiveur (F), volant dans le sillage de l'aéronef meneur (L), le système de gestion de vol (3F) étant configuré pour calculer une trajectoire et définir un plan de vol de l'aéronef suiveur (F) à partir de paramètres de vol dudit aéronef, et calculer la position des centres des tourbillons de sillage (30,31) à partir de paramètres de vol de l'aéronef meneur (L), le système de gestion de vol 3F) de l'aéronef suiveur (F) comprenant une base de données (3B) comprenant une table de décision dans laquelle différentes manoeuvres sont répertoriées et à chaque manoeuvre est associée une manoeuvre d'évitement prédéterminée, **caractérisé en ce que** le procédé comprend les étapes successives suivantes :

- une étape de mise en vol en formation (E1), dans laquelle le système de gestion de vol (3F) de l'aéronef suiveur (F) définit un plan de vol dans lequel l'aéronef suiveur vole à une distance prédéterminée de l'aéronef meneur (L) et se place à une distance prédéterminée d'un centre d'un des tourbillons de sillage (30, 31) ;

- une étape de réception de paramètres inertiels (E2), dans laquelle le système de gestion de vol (3F) de l'aéronef suiveur (F) formule une demande de paramètres inertiels de l'aéronef meneur (L) et reçoit, via un échange de signaux entre l'aéronef meneur (L) et l'aéronef suiveur (F), les paramètres inertiels de l'aéronef meneur (L) ;
- une étape d'estimation (E2bis), dans laquelle le système de gestion de vol (3F) de l'aéronef suiveur (F), estime, à partir des paramètres inertiels de l'aéronef meneur (L), quelle est la manoeuvre entreprise par ledit aéronef ; et
- une étape de prise de décision (E3), dans laquelle le système de gestion de vol (3F) de l'aéronef suiveur (F) recherche une correspondance entre la manoeuvre de l'aéronef meneur (L) déterminée à l'étape de d'estimation (E2bis) et une des manoeuvres enregistrées dans la table de décision,

    • si une correspondance est trouvée, le système de gestion de vol (3F) modifie le plan de vol en mettant en oeuvre une manoeuvre d'évitement prédéterminée associée à la manoeuvre enregistrée dans la table de décision de sorte que l'aéronef suiveur (F) évite le tourbillon de sillage (30,31) ;

**2.** Procédé d'anticipation selon la revendication 1, l'aéronef suiveur (F) comprenant un système d'évitement de collision (6F) configuré pour détecter des probabilités de collisions avec d'autres aéronefs volant dans un système de surveillance réparti autour de l'aéronef, **caractérisé en ce que** dans l'étape de réception de paramètres inertiels (E2), l'échange de signaux s'effectue entre le système d'évitement de collision (6F) de l'aéronef suiveur (F) et un système d'évitement de collision (6F) de l'aéronef meneur (L).

Fig. 1

3L,3F

10L,10F

11L,11F    12L,12F

6L,6F

11L,11F    13L,13F

Fig. 2

Fig. 3a

Fig. 3b

Fig. 3c

$E_1$ FORMATION

$E_2$

$E_{2a}$ INTEROGATION

$E_{2b}$ TRANSMISSION

$E_{2c}$ RECEPTION

$E_3$ DECISION

$\varnothing$

$E_4$ REINITIALISATION

Fig. 4

Fig. 5

Europäisches
Patentamt

European
Patent Office

Office européen
des brevets

**RAPPORT DE RECHERCHE EUROPEENNE**

Numéro de la demande

EP 18 18 2475

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | FR 3 041 121 A1 (AIRBUS [FR]) 17 mars 2017 (2017-03-17) * page 1, ligne 23 - page 4, ligne 5 * * page 4, ligne 27 - page 24, ligne 13; figures 1-5 * ----- | 1,2 | INV. G08G5/00 G08G5/02 G05D1/10 |
| A | US 2007/103340 A1 (BARANOV NIKOLAI A [RU] ET AL) 10 mai 2007 (2007-05-10) * alinéas [0023] - [0094], [0103] - [0118]; figures 1,2 * ----- | 1,2 | |
| A | US 2014/136110 A1 (NYKL SCOTT LARSON [US] ET AL) 15 mai 2014 (2014-05-15) * alinéas [0007] - [0009], [0035] - [0045]; figures 4, 7 * ----- | 1,2 | |
| A | US 2002/075171 A1 (KUNTMAN DARYAL [US] ET AL) 20 juin 2002 (2002-06-20) * alinéas [0092] - [0129]; figures 7-8J * ----- | 1,2 | |
| Y | EP 2 187 371 A1 (SAAB AB [SE]) 19 mai 2010 (2010-05-19) * alinéas [0005] - [0014], [0016] - [0019], [0032]; figures 1, 2, 6 * ----- | 1,2 | DOMAINES TECHNIQUES RECHERCHES (IPC) |
| A | EP 2 772 817 A2 (BOEING CO [US]) 3 septembre 2014 (2014-09-03) * le document en entier * ----- | 1,2 | G08G G05D |

Le présent rapport a été établi pour toutes les revendications

| Lieu de la recherche | Date d'achèvement de la recherche | Examinateur |
|---|---|---|
| La Haye | 11 décembre 2018 | Pariset, Nadia |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 18 18 2475

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

11-12-2018

| Document brevet cité au rapport de recherche | | | Date de publication | Membre(s) de la famille de brevet(s) | | | Date de publication |
|---|---|---|---|---|---|---|---|
| FR 3041121 | A1 | | 17-03-2017 | AUCUN | | | |
| US 2007103340 | A1 | | 10-05-2007 | AT | 499673 | T | 15-03-2011 |
| | | | | AU | 2003301511 | A1 | 14-02-2005 |
| | | | | CA | 2536671 | A1 | 03-02-2005 |
| | | | | CN | 1906501 | A | 31-01-2007 |
| | | | | EA | 200600099 | A1 | 25-08-2006 |
| | | | | EP | 1653250 | A1 | 03-05-2006 |
| | | | | US | 2007103340 | A1 | 10-05-2007 |
| | | | | WO | 2005010555 | A1 | 03-02-2005 |
| US 2014136110 | A1 | | 15-05-2014 | US | 2014136110 | A1 | 15-05-2014 |
| | | | | WO | 2012170991 | A1 | 13-12-2012 |
| US 2002075171 | A1 | | 20-06-2002 | US | 7411519 | B1 | 12-08-2008 |
| | | | | US | 2002075171 | A1 | 20-06-2002 |
| EP 2187371 | A1 | | 19-05-2010 | BR | PI0904628 | A2 | 15-03-2011 |
| | | | | EP | 2187371 | A1 | 19-05-2010 |
| | | | | US | 2010121503 | A1 | 13-05-2010 |
| EP 2772817 | A2 | | 03-09-2014 | CA | 2833877 | A1 | 28-07-2014 |
| | | | | EP | 2772817 | A2 | 03-09-2014 |
| | | | | ES | 2649474 | T3 | 12-01-2018 |
| | | | | US | 2014214243 | A1 | 31-07-2014 |

EPO FORM P0460

Pour tout renseignement concernant cette annexe : voir Journal Officiel de l'Office européen des brevets, No.12/82